# EUROPEAN PATENT SPECIFICATION

(11) **EP 1 484 909 B1**
(45) Date of publication and mention of the grant of the patent: **03.01.2007**
(21) Application number: 04253324.0
(22) Date of filing: 04.06.2004
(51) Int. Cl.: H04N 5/232

(54) **Camera control device and digital still camera**
Kamerasteuervorrichtung und digitale Standbildkamera
Dispositif de commande de caméra et caméra électronique à images fixes

(30) Priority: 05.06.2003 JP 2003161274; 22.04.2004 JP 2004126813
(43) Date of publication of application: 08.12.2004
(60) Divisional application: 06001690.4
(73) Proprietor: Ricoh Company, Ltd., Tokyo (JP)
(72) Inventor: Serikawa, Yoshio, Saitama (JP)
(74) Representative: Leeming, John Gerard

(56) References cited:
- EP-A- 0 828 383
- US-A- 5 963 255
- US-A1- 2002 171 755
- US-B1- 6 393 220

## Description

### BACKGROUND OF THE INVENTION

### FIELD OF THE INVENTION

The present invention relates to a camera control device and to a digital still camera having the camera control device, and in particular to a camera control device that is able to execute a fast shutter release and to a digital still camera having the above-mentioned camera control device.

### DESCRIPTION OF THE RELATED ART

A known digital still camera includes several units primarily driven with a battery as a power source. These units can include a stroboscope and a LCD monitoring display, for example. Consumption of the battery for operating the digital still camera must be suppressed as much as possible in order to achieve a long battery life. One prior art design suggests using a camera control device configured to permit a shutter release only after a stroboscope is fully charged, after which electricity is then solely supplied to an LCD monitor. In this way, power is supplied to only one of the stroboscope and the LCD monitor at any given time, thereby conserving battery power. Under such a configuration, however, there exists a problem that a chance for shooting could be missed if the charge-up time is long.

Also addressing the issue of conserving battery life is Japanese Patent Laid-Open No. 11-38471, which describes a camera having an LCD monitoring display and an optical finder, in which a back light of the LCD monitoring display is turned off when a user looks at a subject through the optical finder.

Similarly, Japanese Patent Laid-Open No. 2001-169167 proposes a method in which a processing time is shortened by means of timing adjustment or multiplexing of timing to output conversion data when converting an image data of a subject.

Also, Japanese Patent Laid-Open No. 2001-249381 describes a camera including a stroboscope and a shutter release switch that has two phases. Specifically, when charged voltage of the stroboscope reaches a predetermined level that could emit light when the shutter release switch is pushed down to the first phase, the camera stops charging and permits a shutter release. In this way, an image can be captured before the stroboscope is fully charged.

However, the above-described configurations do not optimally manage the supply of power from a power source to units of a digital camera and, consequently, opportunities for image capturing can be lost and/or battery power can be unnecessarily used.

EP-A-0 828 383 discloses a digital still camera with a battery voltage detector circuit for controlling the driving of power supply circuit for various components of the camera.

US-B-6 393 2201 discloses a camera device that is configured to wait for an electronic flash to be charged to a "shooting-possible-voltage" before the system controller activates "DCDC converter" to divert power to LCD and imaging circuits of the camera.

US 2002/171755 A1 discloses a battery property judging circuit for a camera. The disclosed camera is adapted to be usable both with its own "exclusive use" battery and also third party alkali batteries.

US-A-5 963 255 discloses a camera device with a feature for selecting between various lower power states of the camera based on comparison of a measured voltage of a power supply with a voltage threshold.

### SUMMARY OF THE INVENTION

It is an object of the present invention to provide a camera control device, and a digital camera having the camera control device, that provides for shooting without missing a shooting chance, for controlling unnecessary electric current supplied to the monitoring display, and for extending battery life, by means of controlling a supply of electric current.

According to an aspect of the invention, there is provided a camera control device comprising:
power supply monitoring means for monitoring a condition of a power source arranged in a digital still camera; and
power supply control means for controlling a supply of electric current from said power source to a plurality of units arranged in said digital still camera, wherein
said power supply monitoring means includes first determination means configured to determine whether said power source is in a state in which said power source is able to supply electric current to at least two of the plurality of units simultaneously, said determining being based on a first predetermined criterion,
said power supply control means is arranged to control the supply of electric current to at least one of said plurality of units based on a result of a determination of said first determination means, and said first determination means is arranged to measure a voltage of said power source and output a result of said determination based on said measured voltage, characterised in that
said first predetermined criterion consists of a first sub-criterion and a second sub-criterion,
said first determination means is configured to use said first sub-criterion to determine when electric current can be supplied from said power source to two of said plurality of units,
said first determination means is configured to use said second sub-criterion to determine when electric current is to be withheld from a first one of the plurality of units during supply of electric current to a second one of the plurality of units, and
said first sub-criterion determines whether said voltage is above a first predetermined voltage and said second sub-criterion determines whether said voltage is below a second predetermined voltage, said first predetermined voltage being higher than said second predetermined voltage.

According to a further aspect of the invention, there is provided a method for controlling a digital still camera including a power source and a plurality of units, comprising:
monitoring a condition of said power source;
determining, as a first determination and based on a first predetermined criterion, whether said power source is in a state in which said power source is able to supply electric current to at least two of said plurality of units simultaneously;
controlling said power source to supply electric current to said plurality of units based on said first determination;
determining said first determination based on a measured voltage of said power source, characterised by
storing said first predetermined criterion in said digital still camera, said first predetermined criterion consisting of a first sub-criterion and a second sub-criterion;
referring to said first sub-criterion to determine when electric current can be supplied from said power source to two of said plurality of units;
referring to said second sub-criterion to determine when electric current is to be withheld from a first one of the plurality of units during a supply of electric current to a second one of the plurality of units; and
said first sub-criterion comprising determining whether said measured voltage is above a first predetermined voltage and said second sub-criterion comprising determining whether said measured voltage is below a second predetermined voltage, said first predetermined voltage being higher than said second predetermined voltage.

The power source is detachably arranged in the digital camera in order to supply electric current to the units of the digital camera, including a camera control unit and load circuit units. The power source can be configured as a lithium ion battery, an alkaline (e.g., size AA) battery, or a dummy battery that is connected to AC power, for example. The camera control unit and load circuit units are arranged in the digital still camera to execute each function of the camera.

The load circuit includes, for example, an image input, an audio input, an operation member, a photometry input, a range-finding input, a monitoring display that displays a captured image, an external I/O, an audio output, a stroboscope, a status display, and a data storage. One aspect of the present invention is directed to a digital camera including both a stroboscope and a monitoring display in the digital camera. According to this aspect, the camera control device is arranged as a CPU and, therefore, the power supply monitoring means and the power supply control means correspond to the camera control device.

The power supply monitoring means includes a first determination means to determine whether the power source is in a state which can supply electric current to at least two of the load circuit units simultaneously. The determination of the first determination means is based on a predetermined criterion. The power supply control means controls the supply of electric current to the load circuit units based on the result of the determination of the first determination means.

In an aspect of the present invention, the first determination means determines a voltage of the power source and outputs a result of the determination based on the voltage measured. Also, because several types of power sources can be detachably arranged in the digital camera, the power supply monitoring means can monitor the attached power source and can output a result of the determination corresponding to the type of the attached power source.

In another aspect of the present invention, the first determination means, refers to a first sub-criterion and a second sub-criterion. The first sub-criterion is used for determining when to supply electric current from the power source to the load circuit units. The second sub-criterion is used for determining when to prevent a supply of electric current to a unit, such the monitoring display, when electric current is supplied to another unit, such as the stroboscope. The first sub-criterion is set higher than the second sub-criterion.

In a further aspect of the present invention, the power supply monitoring means includes a second determination means for determining a charging condition of the stroboscope based on a predetermined criterion, and the power supply control means controls the supply of electric current from the power source to the monitoring display based on a result of a determination of the second determination means. The predetermined criterion of the second determination means can be a minimum voltage at which the stroboscope can emit light.

In another aspect of the present invention, the first determination means measures the voltage of the power source while supplying electric current to the displaying means before charging of the stroboscope is completed. The power supply control means interrupts the electric current supply from the power source to the monitoring display means when the measured voltage of the power source is less than a predetermined criterion, and controls resumption of the electric current supply from the power source to the monitoring displaying means when the charging of the stroboscope is completed. Namely, the charging of the stroboscope is interrupted when the voltage of the power source that is measured during charging becomes less than a predetermined voltage, and the electric current supply to the monitoring display is resumed after the charging of stroboscope is completed.

In a further aspect of the present invention, the predetermined criterion referred to by the second determination means is set at a particular voltage level such that the stroboscope will reach a full-charged voltage at the same time as when a predetermined stand-by time passes. The predetermined stand-by time is the time required to pass before the monitoring display can display an image after receiving electric current.

By using the various aspects of the present invention, a digital still camera can shoot without missing a shooting chance moreover, can control unnecessary supply of electric current to a monitoring display, and can extend battery life, by means of controlling the supply of electric current.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

Figure 1 is a block diagram of a digital still camera in accordance with an aspect of the present embodiment.

Figure 2 is a block diagram illustrating the supply of electricity to elements of the digital still camera of Figure 1.

Figure 3 is a schematic representation of the power source switch of Figure 2.

Figure 4 is a schematic representation of the stroboscope of Figure 1.

Figures 5a and 5b are a flow chart of the charging operation for the stroboscope of Figure 1.

### DETAILED DESCRIPTION OF THE PREFERRED EMBODIMENTS

Referring now to the drawings, wherein like reference numerals designate identical or corresponding parts throughout the several views, a detailed description is made of the various aspects of the present invention. The above and further objects and novel features of the present invention will more fully appear from the following detailed description when the same is read in connection with the accompanying drawing. It is to be expressly understood, however, that the drawing are for purposes of illustration only and are not intended to define the limits of the present invention.

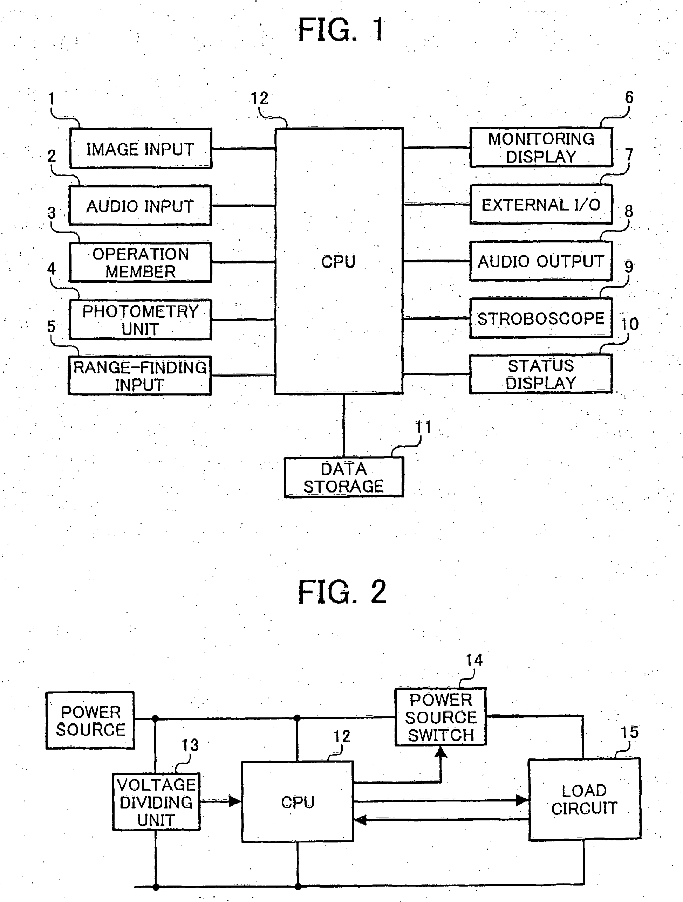

Fig. 1 is a block diagram of a digital still camera according to an aspect of the present invention. The digital still camera includes a camera control unit and a load circuit having a plurality of units, which are configured to perform functions of the camera. The load circuit includes an image input 1, an audio input 2, an operation member 3, a photometry input 4, a range-finding input 5, a monitoring display 6, an external I/O 7, an audio output 8, a stroboscope 9, a status display 10, and a data storage 11.

The camera control device is arranged as a CPU 12 and includes input/output ports communicatively connected to each of the load circuit units 1-11. The CPU 12 corresponds to a power supply monitoring means for monitoring a condition of a power source arranged in the digital still camera, and to a power supply control means for controlling a supply of electric current from the power source to the load circuit units 1-11. The CPU 12 can be configured as a conventional processing unit or, alternatively, as any other type of processing unit.

The image input 1 includes a shutter member, an optical lens, a focusing member, a diaphragm, the CCD, and an image input circuit (not shown). The image input 1 is configured to capture an optical image of a subject and to convert the optical image to an electric signal as an image data. The capture image data is processed in the CPU 12. The audio input 2 is configured to receive an audio signal from a microphone (not shown) and to send the audio signal to the CPU 12. The audio signal is processed in the CPU 12. The operation member 3 is configured to be operated by a user for setting an operation condition of the camera, such as shutter releasing, zooming, and data processing. The photometry input 4 is configured to input a condition of brightness. The range-finding input 5 is configured to input distance information to the subject. Either of the photometry input 4 or the range-finding input 5 can be omitted from the camera when the CCD is configured to receive brightness or distance information.

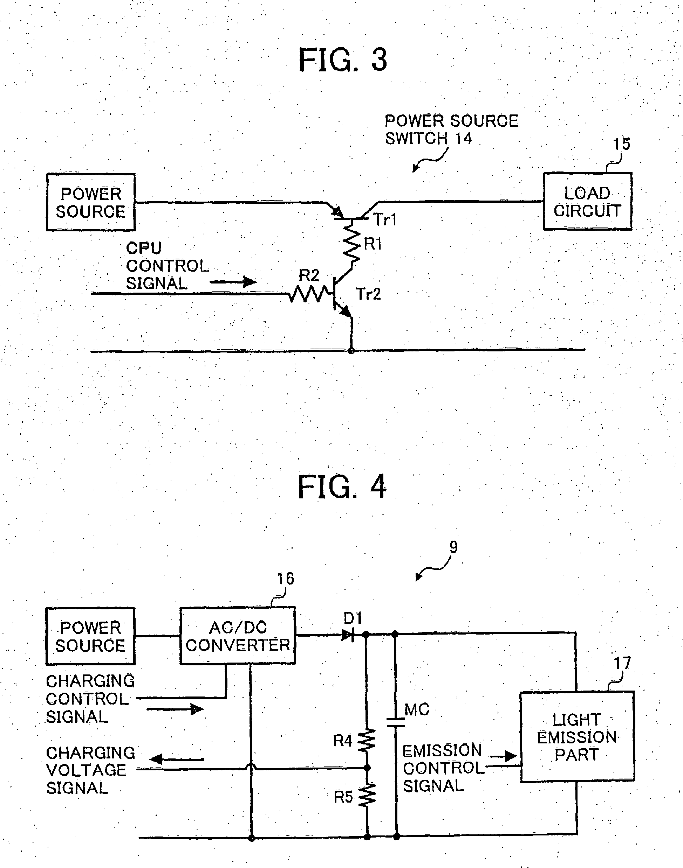

The monitoring display 6 is configured to display the image data processed in the CPU 12, and can be arranged as an LCD monitoring display, for example. The external I/O 7 is configured to communicate with an external apparatus such as a personal computer. The audio output 8 is configured to output the audio data as an audible sound. The stroboscope 9 includes a charging part and a light emission part 17 (Figure 4). The emission of light at the stroboscope 9 is controlled by the CPU 12, which receives from the stroboscope 9 a charging voltage signal. The status display 10 is configured to display condition information such as an auto focus condition and a condition of the stroboscope 9. The data storage 11 is configured to store data for operation of the digital still camera, such as image data and audio data. The CPU 12 is configured to control an operation of above-mentioned plurality of units, including the image input 1, the audio input 2, the operation member 3, the photometry input 4, the range-finding input 5, the monitoring display the, an external I/O 7, the audio output 8, the stroboscope 9, the status display 10, and the data storage 11.

Figure 2 is a block diagram illustrating the supply of electricity to each of the units 1 11 described above, collectively represented as a load circuit 15. The voltage-dividing unit 13 divides voltage of a power source to a predetermined voltage that is readable by the CPU 12, and the CPU 12 determines a condition of the power source based on the divided voltage by using an A/D converter function. Electric current is supplied to units of the load circuit 15 from the power source, and the electric current supply is controlled by the CPU 12 using a power source switch 14. The load circuit 15 can be configured such that power supplied to it is solely controlled by the CPU 12 and, in this case, the power source switch 14 is not necessary. Each unit of the load circuit 15 is controlled by an I/O signal from the CPU 12.

Figure 3 is an example of a configuration of the power source switch 14. When a CPU control signal transmitted by the CPU 12 is a logic high, a transistor Tr2 is switched 'ON' and then a transistor Tr1 is switched 'ON' in sequence. As a result, electric current from the power source is supplied and controlled for the load circuit 15.

Figure 4 is an example of a configuration of the stroboscope 9. The voltage of the power source is pulled up at the AC/DC converter 16 based on a charging control signal transmitted by the CPU 12. Subsequently, electric current is commutated at diode D1 and is charged to main capacitor MC. A charging voltage of the stroboscope 9 is pulled down at both a resistor R4 and a resistor R5 to a predetermined voltage that is readable by the CPU 12, and the pulled down voltage is sent back to the CPU 12. The CPU 12 estimates the charging voltage of the stroboscope with the pulled down voltage by means of an A/D converting function. The light emission part 17 is configured to selectively start and stop emission of light based on a light emission control signal transmitted from the CPU 12.

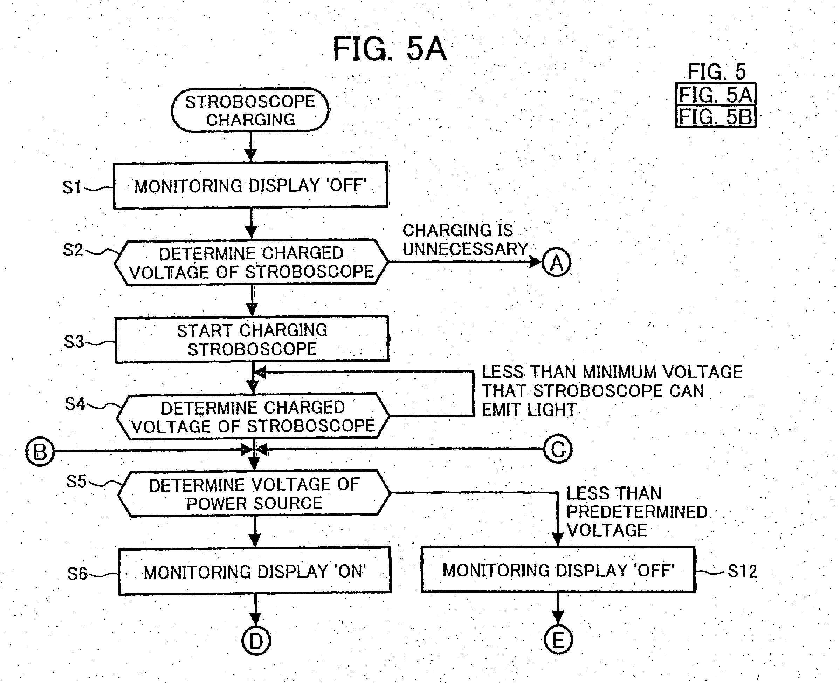

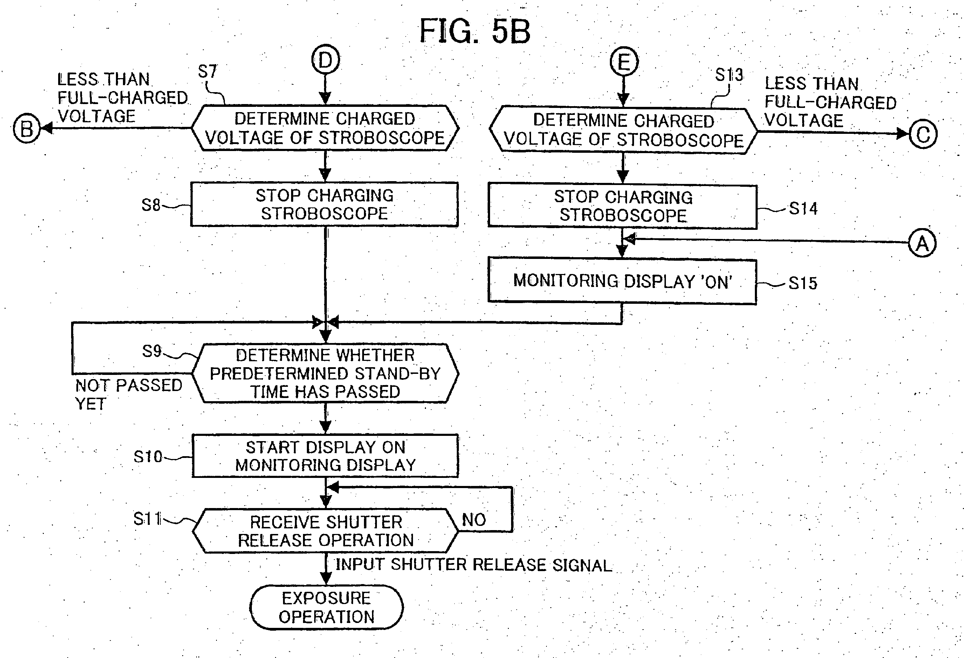

Figures 5a and 5b illustrate the steps of charging the stroboscope 9. At first, electric current is not supplied to the LCD monitoring display from the power source, such that the monitoring display is in an 'OFF' setting (step S1). Charging to the stroboscope 9 is determined to be necessary (step S2) if voltage charged currently in the stroboscope 9 is less than a predetermined minimum voltage necessary to emit light. When the present voltage of the stroboscope 9 is determined to be less than the predetermined minimum voltage, CPU 12 transmits the charging control signal to charge the stroboscope 9 and charging starts (step S3). The predetermined minimum voltage is a criterion set based on a minimum light volume from the light emission part 17 that is needed for shooting. Data representing the predetermined minimum voltage can be stored in a memory unit of the CPU 12 or in another memory unit of the digital still camera.

The CPU 12 monitors a charging voltage signal transmitted from the stroboscope 9, and when the charged voltage of the stroboscope reaches the minimum voltage to emit light (step S4), the CPU determines the voltage of the power source (step S5). The CPU 12 deems that the power source is in a state able to supply power to at least two of the units of the load circuit 15, e.g., the stroboscope 9 and the monitoring display 6, if the voltage of the power source is more than or equal to a predetermined criterion relating to the power source. Data representing this predetermined criterion can be stored in a memory unit located in the CPU 12 or in another memory unit of the digital still camera. When the voltage of the power source is greater than or equal to the predetermined criterion, the CPU 12 transmits a control signal to the power source switch 14 to allow a supply of electric current to the monitoring display 6. This supply of electric current switches the monitoring display 6 to an "ON" mode (step S6). The predetermined criterion is set higher than a voltage level at which the digital still camera will become unstable if the power source simultaneously supplies electric current to two load circuit units, such as the stroboscope 9 and the monitoring display 6. Step S6 also includes supplying power to the image input 1, which displays a monitoring image on the monitoring display 6.

. Subsequently, the CPU 12 monitors the charging voltage of the stroboscope 9 by monitoring the pulled down voltage by means of an A/D converting function, and step S5 is repeated if the voltage of the stroboscope 9 is less than a full-charged voltage level (step S7). When the voltage of the stroboscope 9 reaches the full-charged voltage, charging is stopped (step S8), and the CPU 12 determines whether the predetermined stand-by time of the monitoring display 6 has passed (step S9). As discussed above, the monitoring display 6 is unable to display an image immediately upon receiving power (e.g., in step S6), and predetermined stand-by time represents the time period between the instance power is supplied to the monitoring display 6 to the instance the monitoring display 6 is able to display an image received from the image input 1. Data representing the predetermined stand-by time can be stored in a memory unit of the CPU 12 or in another memory unit of the digital still camera. If the predetermined stand-by time has passed, displaying on the monitoring display is started (step S10). At the same time, a shutter release operation is allowed (step S11), and an exposure operation will start if a shutter release signal is transmitted based on activation of the operation member 3 by a user.

If the voltage of the power source is determined to be less than the predetermined criterion in step S5, electric current continues to be withheld from the monitoring display 6 (step S12), and the CPU monitors the charging voltage of the stroboscope 9 by monitoring the pulled down voltage by means of the A/D converting function. Step S5 is repeated if it is determined that the voltage of the stroboscope 9 has not reached the full-charged voltage level (step S13). When the voltage of the stroboscope 9 reaches the full-charged voltage, charging is stopped (step S14), and the power source is allowed to supply electric current to the monitoring display 6 via the power source switch 14 (step S15). The process then proceeds to above-mentioned step S9. Processing in steps S 13, S14 and S15 is similar to processing on step S7, S8 and S6, respectively.

While the stroboscope 9 is being charged in step S3, the user may mistakenly believe that the digital still camera is powered off because the monitoring display 6 is in an 'OFF' mode. Such a misunderstanding can be prevented by indicating a charging status during the stroboscope charging operation on a indication substitute means, such as a LED, and then by subsequently resuming displaying on the monitoring display.

Also, the digital still camera can control unnecessary electric current supplied to the monitoring display 6 by setting the predetermined criterion (i.e., the minimum voltage level of the stroboscope 9) referred to in step S4 of Figure 5a to a particular voltage level that allows the stroboscope 9 to be fully-charged at the same time that the monitoring display 6 to ready to display an image (i.e., after the predetermined stand-by time passes). That is, referring to Figures 5a and 5b, the predetermined criterion can be selected such that step S8 or step S14 occur at the same time as step S10, thereby allowing a user to view an image on the monitoring display 6 at the exact moment that the stroboscope 9 is fully-charged.

Moreover, the digital still camera of the present invention can be configured to accommodate several types of power sources, e.g., lithium ion batteries, alkaline batteries, and dummy batteries connected to AC power. The digital still camera can also be configured to detect the type of power sources attached to the digital still camera by way of, for example, a mechanical sensor that transmits an identifying signal to the CPU 12. For finite-power sources, such as lithium ion or alkaline batteries, the digital still camera can efficiently manage battery life by monitoring the selected power source based on determination criterion corresponding to the type of power source and by controlling the supply of electric current according to the power source.

Alternative to the method described above, if the CPU 12 determines that the voltage of the power source is less than the predetermined criterion at step S5, the predetermined criterion may be set to have two values following this determination. The two values include a first sub-criterion used to determine when an electric current can be supplied to both the stroboscope 9 to charge and to the monitoring display 6, and a second sub-criterion used to determine when an electric current is to be withheld from the monitoring display 6 during charging the stroboscope 9. The first sub-criterion is set at a higher level than the second sub-criterion. In this manner, the digital still camera, of the present invention can prevent unstable processing that may occur due to signal noise or an unexpected changing of the voltage of the power source.

The digital still camera of the present invention can perform the above-described functions with a simple composition and without the need for additional components. Obviously, numerous modifications and variations of the present invention are possible in light of the above teachings. It is therefore to be understood that within the scope of the appended claims, the invention may be practiced otherwise than as specifically described herein.

## Claims

1. A camera control device comprising:
power supply monitoring means (12) for monitoring a condition of a power source arranged in a digital still camera; and
power supply control means (12) for controlling a supply of electric current from said power source to a plurality of units arranged in said digital still camera, wherein
said power supply monitoring means (12) includes first determination means (12) configured to determine whether said power source is in a state in which said power source is able to supply electric current to at least two of the plurality of units simultaneously, said determining being based on a first predetermined criterion,
said power supply control means (12) is arranged to control the supply of electric current to at least one of said plurality of units based on a result of a determination of said first determination means (12), and said first determination means (12) is arranged to measure a voltage of said power source and output a result of said determination based on said measured voltage, **characterised in that**
said first predetermined criterion consists of a first sub-criterion and a second sub-criterion,
said first determination means (12) is configured to use said first sub-criterion to determine when electric current can be supplied from said power source to two of said plurality of units,
said first determination means (12) is configured to use said second sub-criterion to determine when electric current is to be withheld from a first one of the plurality of units during supply of electric current to a second one of the plurality of units, and
said first sub-criterion determines whether said voltage is above a first predetermined voltage and said second sub-criterion determines whether said voltage is below a second predetermined voltage, said first predetermined voltage being higher than said second predetermined voltage.

2. The camera control device according to claim 1, wherein,
the power source is one of a plurality of types of power sources, and
said first determination means (12) is arranged to determine the state of the power source based on a type of the power source.

3. The camera control device according to any one of claims 1 to 2, wherein,
the plurality of units includes a strobe light (9) and a displaying means (6) for displaying an image,
said power supply monitoring means (12) includes second determination means (12) configured to determine a charging condition of the strobe light (9) based on a second predetermined criterion, and
said power supply control means (12) is arranged to control a supply of electric current from said power source to said displaying means (6) based on a determination of said second determination means (12).

4. The camera control device according to claim 3, wherein,
said first determination means (12) is arranged to measure a voltage of said power source when a charging voltage of said strobe light (9) is equal to or greater than said second predetermined criterion and before charging of said strobe light (9) is completed,
said power supply control means (12) is arranged to allow electric current to be supplied from said power source to said displaying means (6) when said voltage of said power source is equal to or greater than said first predetermined criterion, and
said power supply control means (12) is arranged to control said displaying means (6) to display said image after said displaying means (6) reaches a state in which said displaying means (6) is able to display said image and after charging of said strobe light (9) is completed.

5. The camera control device according to any one of claims 3 and 4, wherein said second predetermined criterion is a minimum voltage level at which said stroboscope (9) is able to emit light.

6. The camera control device according to any one of claims 3 to 5, wherein,
said first determination means (12) is arranged to measure a voltage of said power source after said power source begins supplying electric current to said displaying means and before charging of said stroboscope is completed,
said power supply control means (12) is arranged to interrupt said supply of electric current from said power source to said displaying means (6) when said voltage of said power source is less than said first predetermined criterion, and
said power supply control means (12) is arranged to control resumption of said supply of electric current from said power source to said displaying means (6) when said strobe light (9) is fully-charged.

7. The camera control device according to claim 3, wherein said second predetermined criterion is set at a voltage level such that said strobe light (9) will reach a full-charged level when a predetermined stand-by time period passes, said predetermined standby time period being a time period from an instance that said displaying means (6) receives electric current from said power source to an instance that said displaying means (6) is able to display said image.

8. A digital still camera comprising:
a plurality of load circuit units;
a power source configured to supply electric current to said plurality of load circuit units; and
a camera control device according to claim 1 wherein said plurality of units refers to said plurality of load circuit units.

9. A camera control device according to any one of claims 1 to 7, comprising:
at least one input-output port communicatively connected to said plurality of units arranged in said digital still camera.

10. A digital still camera comprising a camera control device according to claim 1, wherein said plurality of units comprises:
a strobe light (9) and a monitoring display (6).

11. A digital still camera comprising a camera control device according to any one of claims 1 to 7 wherein each of said plurality of units is configured to perform a function of said digital still camera.

12. A method for controlling a digital still camera including a power source and a plurality of units, comprising:
monitoring a condition of said power source;
determining, as a first determination and based on a first predetermined criterion, whether said power source is in a state in which said power source is able to supply electric current to at least two of said plurality of units simultaneously;
controlling said power source to supply electric current to said plurality of units based on said first determination;
determining said first determination based on a measured voltage of said power source, **characterised by**
storing said first predetermined criterion in said digital still camera, said first predetermined criterion consisting of a first sub-criterion and a second sub-criterion;
referring to said first sub-criterion to determine when electric current can be supplied from said power source to two of said plurality of units;
referring to said second sub-criterion to determine when electric current is to be withheld from a first one of the plurality of units during a supply of electric current to a second one of the plurality of units; and
said first sub-criterion comprising determining whether said measured voltage is above a first predetermined voltage and said second sub-criterion comprising determining whether said measured voltage is below a second predetermined voltage, said first predetermined voltage being higher than said second predetermined voltage.

13. The method for controlling a digital still camera according to claim 12, further comprising:
detecting a type of said power source, which is selected from a plurality of types of detachable power sources;
setting said first predetermined criterion based on said detected type of said power source.

14. The method for controlling a digital still camera according to claim 12 or claim 13, comprising:
determining, as a second determination and based on a second predetermined criterion, a charging condition of a strobe light (9) arranged in said digital still camera; and
controlling, based on said second determination, a supply of electric current from said power source to a monitoring display (6) arranged in said digital still camera.

15. The method for controlling a digital still camera according to claim 14, comprising:
measuring a voltage of said power source when a voltage of said strobe light (9) is equal to or greater than a second predetermined criterion and before charging of said stroboscope is completed;
allowing electric current to be supplied to said displaying means (6) when said measured voltage of said power source is equal to or greater than a predetermined criterion; and
controlling said monitoring display (6) to display an image after said monitoring display (6) reaches a state in which said monitoring display (6) is able to display said image and after charging of said strobe light (9) is completed.

16. The method for controlling a digital still camera according to any one of claims 14 and 15, comprising:
setting said second predetermined criterion to a minimum voltage level at which said strobe light (9) is able to emit light.

17. The method for controlling a digital still camera according to any one of claims 14 to 16, comprising:
measuring a voltage of said power source after said power source begins supplying electric current to said monitoring display (6) and before charging of said strobe light (9) is completed;
interrupting a supply of electric current from said power source to said monitoring display (6) when said measured voltage of said power source is less than the first predetermined criterion; and
allowing said supply of electric current from said power source to said monitoring display (6) when charging of said strobe light (9) is completed.

18. The method for controlling a digital still camera according to claim 14, comprising:
setting said second predetermined criterion to a voltage level such that charging of said strobe light (9) will be completed when a predetermined stand-by time period passes, said predetermined stand-by time period being a time period from an instance that said displaying means (6) receives electric current from said power source to an instance that said displaying means (6) is able to display said image.

## Patentansprüche

1. Kamerasteuervorrichtung, die umfasst:
Leistungsversorgungs-Überwachungsmittel (12), um einen Zustand einer Leistungsquelle, die in einer digitalen Standbildkamera angeordnet ist, zu überwachen; und
Leistungsversorgungs-Steuermittel (12), um die Lieferung von elektrischem Strom von der Leistungsquelle an mehrere Einheiten, die in der digitalen Standbildkamera angeordnet sind, zu steuern, wobei
die Leistungsversorgungs-Überwachungsmittel (12) erste Bestimmungsmittel (12) aufweisen, die so konfiguriert sind, dass sie bestimmen, ob die Leistungsquelle in einem Zustand ist, in dem die Leistungsquelle elektrischen Strom an wenigstens zwei der mehreren Einheiten gleichzeitig liefern kann, wobei die Bestimmung auf einem ersten vorgegebenem Kriterium basiert,
die Leistungsversorgungs-Steuermittel (12) so angeordnet sind, dass sie die Lieferung von elektrischem Strom an wenigstens eine der mehreren Einheiten auf der Grundlage eines Ergebnisses einer Bestimmung der ersten Bestimmungsmittel (12) steuern, und die ersten Bestimmungsmittel (12) so angeordnet sind, dass sie eine Spannung der Leistungsquelle messen und ein Ergebnis dieser Bestimmung auf der Grundlage der gemessenen Spannung ausgeben, **dadurch gekennzeichnet, dass**
das erste vorgegebene Kriterium aus einem ersten Unterkriterium und einem zweiten Unterkriterium besteht,
die ersten Bestimmungsmittel (12) so konfiguriert sind, dass sie das erste Unterkriterium verwenden, um zu bestimmen, wenn elektrischer Strom von der Leistungsquelle an zwei der mehreren Einheiten geliefert wird,
die ersten Bestimmungsmittel (12) so konfiguriert sind, dass sie das zweite Unterkriterium verwenden, um zu bestimmen, wenn die Lieferung von elektrischem Strom an eine erste der mehreren Einheiten während der Lieferung von elektrischem Strom an eine zweite der mehreren Einheiten verhindert wird, und
das erste Unterkriterium bestimmt, ob die Spannung oberhalb einer ersten vorgegebenen Spannung liegt, und das zweite Unterkriterium bestimmt, ob die Spannung unter einer zweiten vorgegebenen Spannung liegt, wobei die erste vorgegebene Spannung höher als die zweite vorgegebene Spannung ist.

2. Kamerasteuervorrichtung nach Anspruch 1, bei der
die Leistungsquelle eine von mehreren Typen von Leistungsquellen ist und
die ersten Bestimmungsmittel (12) so angeordnet sind, dass sie den Zustand der Leistungsquelle auf der Grundlage eines Typs der Leistungsquelle bestimmen.

3. Kamerasteuervorrichtung nach einem der Ansprüche 1 bis 2, bei der
die mehreren Einheiten ein Stroboskoplicht (9) und Anzeigemittel (6), um ein Bild anzuzeigen, umfassen,
die Leistungsversorgungs-Überwachungsmittel (12) zweite Bestimmungsmittel (12) aufweisen, die so konfiguriert sind, dass sie einen Ladezustand des Stroboskoplichts (9) auf der Grundlage eines zweiten vorgegebenen Kriteriums bestimmen, und
die Leistungsversorgungs-Steuermittel (12) so angeordnet sind, dass sie die Lieferung von elektrischem Strom von der Leistungsquelle an die Anzeigemittel (6) auf der Grundlage einer Bestimmung der zweiten Bestimmungsmittel (12) steuern.

4. Kamerasteuervorrichtung nach Anspruch 3, bei der
die ersten Bestimmungsmittel (12) so angeordnet sind, dass sie eine Spannung der Leistungsquelle messen, wenn eine Ladespannung des Stroboskoplichts (9) gleich oder größer als das zweite vorgegebene Kriterium ist, und bevor das Laden des Stroboskoplichts (9) abgeschlossen worden ist,
die Leistungsversorgungs-Steuermittel (12) so angeordnet sind, dass sie die Lieferung von elektrischem Strom von der Leistungsquelle an die Anzeigemittel (6) zulassen, wenn die Spannung der Leistungsquelle gleich oder größer als das erste vorgegebene Kriterium ist, und
die Leistungsversorgungs-Steuermittel (12) so angeordnet sind, dass sie die Anzeigemittel (6) steuern, damit sie das Bild anzeigen, nachdem die Anzeigemittel (6) einen Zustand erreicht haben, in dem die Anzeigemittel (6) das Bild anzeigen können, und nachdem das Laden des Stroboskoplichts (9) abgeschlossen worden ist.

5. Kamerasteuervorrichtung nach einem der Ansprüche 3 und 4, bei der das zweite vorgegebene Kriterium ein minimaler Spannungspegel ist, bei dem das Stroboskop (9) Licht aussenden kann.

6. Kamerasteuervorrichtung nach einem der Ansprüche 3 bis 5, bei der
die ersten Bestimmungsmittel (12) so angeordnet sind, dass sie eine Spannung der Leistungsquelle messen, nachdem die Leistungsquelle begonnen hat, elektrischen Strom an die Anzeigemittel zu liefern, und bevor das Laden des Stroboskops abgeschlossen worden ist,
die Leistungsversorgungs-Steuermittel (12) so angeordnet sind, dass sie die Lieferung von elektrischem Strom von der Leistungsquelle an die Anzeigemittel (6) unterbrechen, wenn die Spannung der Leistungsquelle niedriger als das erste vorgegebene Kriterium ist, und
die Leistungsversorgungs-Steuermittel (12) so angeordnet sind, dass sie die Wiederaufnahme der Lieferung von elektrischem Strom von der Leistungsquelle an die Anzeigemittel (6) steuern, wenn das Stroboskoplicht (9) vollständig geladen ist.

7. Kamerasteuervorrichtung nach Anspruch 3, bei der das zweite vorgegebene Kriterium auf einen Spannungspegel gesetzt ist, derart, dass das Stroboskoplicht (9) einen vollständig geladenen Pegel erreicht, wenn eine vorgegebene Bereitschaftszeitdauer verstrichen ist, wobei die vorgegebene Bereitschaftszeitdauer eine Zeitdauer von einem Zeitpunkt, zu dem die Anzeigemittel (6) elektrischen Strom von der Leistungsquelle empfangen, zu einem Zeitpunkt, zu dem die Anzeigemittel (6) das Bild anzeigen können, ist.

8. Digitale Standbildkamera, die umfasst:
mehrere Lastschaltungseinheiten;
eine Leistungsquelle, die so konfiguriert ist, dass sie elektrischen Strom zu den mehreren Lastschaltungseinheiten liefert; und
eine Kamerasteuervorrichtung nach Anspruch 1, bei der sich die mehreren Einheiten auf die mehreren Lastschaltungseinheiten beziehen.

9. Kamerasteuervorrichtung nach einem der Ansprüche 1 bis 7, die umfasst:
wenigstens einen Eingangs/Ausgangs-Anschluss, der mit den mehreren Einheiten, die in der digitalen Standbildkamera angeordnet sind, kommunikativ verbunden ist.

10. Digitale Standbildkamera, die eine Kamerasteuervorrichtung nach Anspruch 1 umfasst, bei der die mehreren Einheiten umfassen:
ein Stroboskoplicht (9) und eine Überwachungsanzeige (6).

11. Digitale Standbildkamera, die eine Kamerasteuervorrichtung nach einem der Ansprüche 1 bis 7 umfasst, bei der die mehreren Einheiten so konfiguriert sind, dass sie eine Funktion der digitalen Standbildkamera ausführen.

12. Verfahren zum Steuern einer digitalen Standbildkamera, die eine Leistungsquelle und mehrere Einheiten enthält, das umfasst:
Überwachen eines Zustands der Leistungsquelle;
Bestimmen als eine erste Bestimmung und auf der Grundlage eines ersten vorgegebenen Kriteriums, ob die Leistungsquelle in einem Zustand ist, in dem die Leistungsquelle elektrischen Strom an wenigstens zwei der mehreren Einheiten gleichzeitig liefern kann;
Steuern der Leistungsquelle auf der Grundlage der ersten Bestimmung, um elektrischen Strom an die mehreren Einheiten zu liefern;
Ausführen der ersten Bestimmung auf der Grundlage einer gemessenen Spannung der Leistungsquelle, **gekennzeichnet durch**
Speichern des ersten vorgegebenen Kriteriums in der digitalen Standbildkamera, wobei das erste vorgegebene Kriterium aus einem ersten Unterkriterium und einem zweiten Unterkriterium besteht;
Bezugnehmen auf das erste Unterkriterium, um zu bestimmen, wenn elektrischer Strom von der Leistungsquelle an zwei der mehreren Einheiten geliefert werden kann; und
Bezugnehmen auf das zweite Unterkriterium, um zu bestimmen, wenn die Lieferung von elektrischem Strom an eine erste der mehreren Einheiten verhindert wird, während elektrischer Strom an eine zweite der mehreren Einheiten geliefert wird;
wobei das erste Unterkriterium das Bestimmen, ob die gemessene Spannung über einer ersten vorgegebenen Spannung liegt, umfasst und das zweite Unterkriterium das Bestimmen, ob die gemessene Spannung unter einer zweiten vorgegebenen Spannung liegt, umfasst, wobei die erste vorgegebene Spannung höher als die zweite vorgegebene Spannung ist.

13. Verfahren zum Steuern einer digitalen Standbildkamera nach Anspruch 12, das ferner umfasst:
Ermitteln eines Typs der Leistungsquelle, der aus mehreren Typen entnehmbarer Leistungsquellen ausgewählt ist;
Setzen des ersten vorgegebenen Kriteriums auf der Grundlage des ermittelten Typs der Leistungsquelle.

14. Verfahren zum Steuern einer digitalen Standbildkamera nach Anspruch 12 oder Anspruch 13, das umfasst:
Bestimmen als eine zweite Bestimmung und auf der Grundlage eines zweiten vorgegebenen Kriteriums eines Ladezustands eines Stroboskoplichts (9), das in der digitalen Standbildkamera angeordnet ist; und
Steuern einer Lieferung von elektrischem Strom von der Leistungsquelle an eine in der digitalen Standbildkamera angeordnete Überwachungsanzeige (6) auf der Grundlage der zweiten Bestimmung.

15. Verfahren zum Steuern einer digitalen Standbildkamera nach Anspruch 14, das umfasst:
Messen einer Spannung der Leistungsquelle, wenn eine Spannung des Stroboskoplichts (9) gleich oder größer als ein zweites vorgegebenes Kriterium ist und bevor das Laden des Stroboskops abgeschlossen worden ist;
Zulassen des Lieferns von elektrischem Strom an die Anzeigemittel (6), wenn die gemessene Spannung der Leistungsquelle gleich oder größer als ein vorgegebenes Kriterium ist; und
Steuern der Überwachungsanzeige (6), damit sie ein Bild anzeigt, nachdem die Überwachungsanzeige (6) einen Zustand erreicht hat, in dem die Überwachungsanzeige (6) das Bild anzeigen kann, und nachdem das Laden des Stroboskopilchts (9) abgeschlossen worden ist.

16. Verfahren zum Steuern einer digitalen Standbildkamera nach einem der Ansprüche 14 und 15, das umfasst:
Setzen des zweiten vorgegebenen Kriteriums auf einen minimalen Spannungspegel, bei dem das Stroboskoplicht (9) Licht aussenden kann.

17. Verfahren zum Steuern einer digitalen Standbildkamera nach einem der Ansprüche 14 bis 16, das umfasst:
Messen einer Spannung der Leistungsquelle, nachdem die Leistungsquelle mit der Lieferung von elektrischem Strom an die Überwachungsanzeige (6) begonnen hat, und bevor das Laden des Stroboskoplichts (9) abgeschlossen worden ist;
Unterbrechen einer Lieferung von elektrischem Strom von der Leistungsquelle an die Überwachungsanzeige (6), wenn die gemessene Spannung der Leistungsquelle niedriger als das erste vorgegebene Kriterium ist; und
Zulassen der Lieferung von elektrischem Strom von der Leistungsquelle an die Überwachungsanzeige (6), wenn das Laden des Stroboskoplichts (9) abgeschlossen worden ist.

18. Verfahren zum Steuern einer digitalen Standbildkamera nach Anspruch 14, das umfasst:
Setzen des zweiten vorgegebenen Kriteriums auf einen Spannungspegel, derart, dass das Laden des Stroboskoplichts (9) abgeschlossen sein wird, wenn eine vorgegebene Bereitschaftszeitdauer verstrichen ist, wobei die vorgegebene Bereitschaftszeitdauer eine Zeitdauer von einem Zeitpunkt, zu dem die Anzeigemittel (6) elektrischen Strom von der Leistungsquelle empfangen, zu einem Zeitpunkt, zu dem die Anzeigemittel (6) das Bild anzeigen können, ist.

## Revendications

1. Dispositif de commande d'appareil photographique comprenant :
un moyen de surveillance d'alimentation en puissance (12) destiné à surveiller une condition d'une source de puissance agencée dans un appareil photographique numérique ; et
un moyen de commande d'alimentation en puissance (12) destiné à commander une alimentation en courant électrique provenant de ladite source de puissance d'une pluralité d'unités agencées dans ledit appareil photographique numérique, dans lequel
ledit moyen de surveillance d'alimentation en puissance (12) comprend un premier moyen de détermination (12) configuré afin de déterminer si ladite source de puissance est dans un état dans lequel ladite source de puissance est apte à alimenter en courant électrique au moins deux unités parmi la pluralité d'unités, simultanément, ladite détermination étant basée sur un premier critère prédéterminé,
ledit moyen de commande d'alimentation en puissance (12) est agencé afin de commander l'alimentation en courant électrique d'au moins une unité parmi ladite pluralité d'unités sur la base d'un résultat d'une détermination dudit premier moyen de détermination (12), et ledit premier moyen de détermination (12) est agencé afin de mesurer une tension de ladite source de puissance et sortir un résultat de ladite détermination sur la base de ladite tension mesurée,
**caractérisé en ce que**
ledit premier critère prédéterminé consiste en un premier critère secondaire et un second critère secondaire,
ledit premier moyen de détermination (12) est configuré afin de d'utiliser ledit premier critère secondaire afin de déterminer le moment où un courant électrique peut être délivré à partir de ladite source de puissance aux deux unités parmi ladite pluralité d'unités,
ledit premier moyen de détermination (12) est configuré afin d'utiliser ledit second critère secondaire afin de déterminer le moment où un courant électrique doit être suspendu auprès d'une première unité parmi la pluralité d'unités au cours d'une alimentation en courant électrique d'une deuxième unité parmi la pluralité d'unités, et
ledit premier critère secondaire détermine si ladite tension est au-dessus d'une première tension prédéterminée et ledit second critère secondaire détermine si ladite tension est au-dessous d'une seconde tension prédéterminée, ladite première tension prédéterminée étant plus élevée que ladite seconde tension prédéterminée.

2. Dispositif de commande d'appareil photographique selon la revendication 1, dans lequel, la source de puissance est un type parmi une pluralité de types de sources de puissance, et ledit premier moyen de détermination (12) est agencé afin de déterminer l'état de la source de puissance sur la base d'un type de la source de puissance.

3. Dispositif de commande d'appareil photographique selon l'une quelconque des revendications 1 à 2, dans lequel :
la pluralité d'unités comporte une lumière stroboscopique (9) et un moyen d'affichage (6) destiné à afficher une image,
ledit moyen de surveillance d'alimentation en puissance (12) comporte un second moyen de détermination (12) configuré afin de déterminer une condition de charge de la lumière stroboscopique (9) sur la base d'un second critère prédéterminé, et
ledit moyen de commande d'alimentation en puissance (12) est agencé afin de commander une alimentation en courant électrique provenant de ladite source de puissance jusqu'audit moyen d'affichage (6) sur la base d'une détermination dudit second moyen de détermination (12).

4. Dispositif de commande d'appareil photographique selon la revendication 3, dans lequel,
ledit premier moyen de détermination (12) est agencé afin de mesurer une tension de ladite source de puissance lorsqu'une tension de charge de ladite lumière stroboscopique (9) est égale ou supérieure audit second critère prédéterminé et avant qu'une charge de ladite lumière stroboscopique (9) soit achevée,
ledit moyen de commande d'alimentation en puissance (12) est agencé pour autoriser une alimentation en courant électrique à partir de ladite source de puissance jusqu'audit moyen d'affichage (6) lorsque ladite tension de ladite source de puissance est égale ou supérieure audit premier critère prédéterminé, et
ledit moyen de commande d'alimentation en puissance (12) est agencé afin de commander ledit moyen d'affichage (6) afin d'afficher ladite image après que ledit moyen d'affichage (6) a atteint un état dans lequel ledit moyen d'affichage (6) est apte à afficher ladite image et après qu'une charge de ladite lumière stroboscopique (9) a été achevée.

5. Dispositif de commande d'appareil photographique selon l'une quelconque des revendications 3 et 4, dans lequel ledit second critère prédéterminé est un niveau de tension minimal au niveau duquel ledit stroboscopique (9) est apte à émettre une lumière.

6. Dispositif de commande d'appareil photographique selon l'une quelconque des revendications 3 à 5, dans lequel,
ledit premier moyen de détermination (12) est agencé afin de mesurer une tension de ladite source de puissance après que ladite source de puissance commence à alimenter en courant électrique ledit moyen d'affichage et avant qu'une charge dudit stroboscopique soit achevée,
ledit moyen de commande d'alimentation en puissance (12) est agencé afin d'interrompre ladite alimentation en courant électrique provenant de ladite source de puissance jusqu'audit moyen d'affichage (6) lorsque ladite tension de ladite source de puissance est inférieure audit premier critère prédéterminé, et
ledit moyen de commande d'alimentation en puissance (12) est agencé afin de commander une reprise de ladite alimentation en courant électrique à partir de ladite source de puissance jusqu'audit moyen d'affichage (6) lorsque ladite lumière stroboscopique (9) est complètement chargée.

7. Dispositif de commande d'appareil photographique selon la revendication 3, dans lequel ledit second critère prédéterminé est réglé à un niveau de tension tel que ladite lumière stroboscopique (9) atteindra un niveau de charge complète lorsqu'une période de temps de veille prédéterminée se sera écoulée, ladite période de temps de veille prédéterminée étant une période de temps à partir d'une circonstance au cours dans laquelle ledit moyen d'affichage (6) reçoit un courant électrique provenant de ladite source de puissance jusqu'à une circonstance au cours de laquelle ledit moyen d'affichage (6) est apte à afficher ladite image.

8. Appareil photographique comprenant :
une pluralité d'unités de circuit de chargement ;
une source de puissance configurée pour alimenter en courant électrique ladite pluralité d'unités de circuit de chargement ; et
un dispositif de commande d'appareil photographique selon la revendication 1, dans lequel ladite pluralité d'unités fait référence à ladite pluralité d'unités de circuit de chargement.

9. Dispositif de commande d'appareil photographique selon l'une quelconque des revendications 1 à 7, comprenant :
au moins un pôle d'entrée/sortie raccordé en communication à ladite pluralité d'unités agencées dans ledit appareil photographique numérique.

10. Appareil photographique numérique comprenant un dispositif de commande d'appareil photographique selon la revendication 1, dans lequel ladite pluralité d'unités comprend :
une lumière stroboscopique (9) et un afficheur de surveillance (6).

11. Appareil photographique numérique comprenant un dispositif de commande d'appareil photographique selon l'une quelconque des revendications 1 à 7, dans lequel chaque unité parmi ladite pluralité d'unités est configurée pour effectuer une fonction dudit appareil photographique numérique.

12. Procédé destiné à commander un appareil photographique numérique comportant une source de puissance et une pluralité d'unités, comprenant les étapes consistant à :
surveiller une condition de ladite source de puissance ;
déterminer, en tant qu'une première détermination et sur la base d'un premier critère prédéterminé, si ladite source de puissance est dans un état dans lequel ladite source de puissance est apte à alimenter en courant électrique au moins deux unités parmi ladite pluralité d'unités simultanément ;
commander ladite source de puissance afin d'alimenter en courant électrique ladite pluralité d'unités sur la base de ladite première détermination ;
déterminer ladite première détermination sur la base d'une tension mesurée d'une dite source de puissance, **caractérisé par** les étapes consistant à :
stocker lesdits premiers critères prédéterminés sur ledit appareil photographique numérique, ledit premier critère prédéterminé consistant en un premier critère secondaire et un second critère secondaire ;
se référer audit premier critère secondaire afin de déterminer le moment où un courant électrique peut être délivré à partir de ladite source de puissance jusqu'aux deux unités parmi ladite pluralité d'unités ;
se référer audit second critère secondaire afin de déterminer le moment où un courant électrique doit être suspendu auprès d'une première unité parmi la pluralité d'unités au cours d'une alimentation en courant électrique d'une deuxième unité parmi la pluralité d'unités ; et
ledit premier critère secondaire comprenant l'étape consistant à déterminer si ladite tension mesurée est au-dessus d'une première tension prédéterminée et ledit second critère secondaire comprenant l'étape consistant à déterminer si ladite tension mesurée est au-dessous d'une seconde tension prédéterminée, ladite première tension prédéterminée étant plus élevée que ladite seconde tension prédéterminée.

13. Procédé destiné à commander un appareil photographique numérique selon la revendication 12, comprenant en outre les étapes consistant à :
détecter un type de ladite source de puissance, qui est sélectionné parmi une pluralité de types de sources de puissance démontables ;
régler ledit premier critère prédéterminé sur la base dudit type détecté de ladite source de puissance.

14. Procédé destiné à commander un appareil photographique numérique selon la revendication 12 ou la revendication 13, comprenant les étapes consistant à :
déterminer, en tant qu'une seconde détermination et sur la base d'un second critère prédéterminé, une condition de charge d'une lumière stroboscopique (9) agencée dans ledit appareil photographique numérique ; et
commander sur la base de ladite seconde détermination, une alimentation en courant électrique à partir d'une source de puissance jusqu'à un afficheur de surveillance (6) agencé dans ledit appareil photographique numérique.

15. Procédé destiné à commander un appareil photographique numérique selon la revendication 14, comprenant les étapes consistant à :
mesurer une tension de ladite source de puissance lorsqu'une tension de ladite lumière stroboscopique (9) est égale ou supérieure à un second critère prédéterminé et avant qu'une charge dudit stroboscopique soit achevée ;
autoriser une alimentation en courant électrique dudit moyen d'affichage (6) lorsque ladite tension mesurée de ladite source de puissance est égale ou supérieure à un critère prédéterminé ; et
commander ledit afficheur de surveillance (6) afin d'afficher une image après que ledit afficheur de surveillance (6) a atteint un état dans lequel ledit afficheur de surveillance (6) est apte à afficher ladite image et après qu'une charge de ladite lumière stroboscopique (9) a été achevée.

16. Procédé destiné à commander un appareil photographique numérique selon l'une quelconque des revendications 14 et 15, comprenant les étapes consistant à :
régler ledit second critère prédéterminé sur un niveau de tension minimum au niveau duquel ladite lumière stroboscopique (9) est apte à émettre une lumière.

17. Procédé destiné à commander un appareil photographique numérique selon l'une quelconque des revendications 14 à 16, comprenant les étapes consistant à :
mesurer une tension de ladite source de puissance après que ladite source de puissance a commencé à alimenter en courant électrique ledit afficheur de surveillance (6) et avant qu'une charge de ladite lumière stroboscopique (9) soit achevée ;
interrompre une alimentation en courant électrique à partir de ladite source de puissance jusqu'audit afficheur de surveillance (6) lorsque ladite tension mesurée de ladite source de puissance est inférieure au premier critère prédéterminé ; et
autoriser ladite alimentation en courant électrique à partir de ladite source de puissance jusqu'audit afficheur de surveillance (6) lorsqu'une charge de ladite lumière stroboscopique (9) est achevée.

18. Procédé destiné à commander un appareil photographique numérique selon la revendication 14, comprenant l'étape consistant à :
régler ledit second critère prédéterminé sur un niveau de tension tel qu'une charge de ladite lumière stroboscopique (9) s'achèvera lorsqu'une période de temps de veille prédéterminée se sera écoulée, ladite période de temps de veille prédéterminée étant une période de temps à partir d'une circonstance au cours de laquelle ledit moyen d'affichage (6) reçoit un courant électrique provenant de ladite source de puissance jusqu'à une circonstance au cours de laquelle ledit moyen d'affichage (6) est apte à afficher ladite image.
